# EUROPÄISCHE PATENTSCHRIFT

(11) **EP 1 960 161 B1**
(45) Veröffentlichungstag und Bekanntmachung des Hinweises auf die Patenterteilung: **05.08.2009**
(21) Anmeldenummer: 06818616.2
(22) Anmeldetag: 17.11.2006
(51) Int. Cl.: B25J 15/02

(54) **GREIFVORRICHTUNG FÜR EINEN ROBOTER ODER EINEN PORTALLADER**
GRIPPING DEVICE FOR A ROBOT OR A GANTRY LOADER
DISPOSITIF DE SAISIE POUR ROBOT OU PORTIQUE DE CHARGEMENT

(30) Priorität: 07.12.2005 DE 102005058312
(43) Veröffentlichungstag der Anmeldung: 27.08.2008
(73) Patentinhaber: Dürr Ecoclean GmbH, 70794 Filderstadt (DE)
(72) Erfinder: SIMONS, Marcus, 52152 Simmerath (DE)
(74) Vertreter: Hörner, Andreas
(86) Internationale Anmeldenummer: PCT/EP2006/011036
(87) Internationale Veröffentlichungsnummer: WO 2007/065552

(56) Entgegenhaltungen:
- EP-A- 1 293 307
- JP-A- 63 134 133

## Beschreibung

Die vorliegende Erfindung betrifft eine Greifvorrichtung für einen Roboter oder einen Portallader, umfassend mindestens eine linear verschiebbaren Greifbacken und mindestens einen schwenkbaren Greifanschluss.

Die bekannten Greifvorrichtungen für Roboter werden für jede Anwendung speziell konstruiert und gefertigt, weshalb beim Um- oder Einrüsten eines geometrisch vollkommen neuen Werkstückes ein sehr hoher Aufwand entsteht, was zu hohen Beschaffungskosten und langen Lieferzeiten für solche Greifvorrichtungen führt.

Die EP-A-1 293 307 offenbart eine gattungsgemäße Greifvorrichtung für einen Roboter, die linear verschiebbare Greifbacken und schwenkbare Greifanschlüsse umfasst.

Der vorliegenden Erfindung liegt die Aufgabe zugrunde, eine flexibel einsetzbare Greifvorrichtung für einen Roboter oder für einen Portallader zu schaffen.

Diese Aufgabe wird erfindungsgemäß durch eine Greifvorrichtung für einen Roboter oder einen Portallader nach Anspruch 1 gelöst.

Durch die linear verschiebbare Greifbacke ist die Greifvorrichtung dazu in der Lage, ein Werkstück mittels eines an der Greifbacke angeordneten und daher linear verschiebbaren Greifelements zu greifen.

Durch den schwenkbaren Greifanschluss ist die Greifvorrichtung dazu in der Lage, ein Werkstück mittels eines an dem Greifanschluss angeordneten Greifelements in einer Schwenkbewegung direkt oder mittels einer mechanischen Umlenkung zu greifen.

Da beide Bewegungsmöglichkeiten bereits in die Greifvorrichtung integriert sind und lediglich die Greifelemente, welche mit dem Werkstück in Kontakt kommen, von der Greifbacke zu dem Greifanschluss oder in umgekehrter Richtung versetzt werden müssen, um die Werkstückgreifbewegung von einer linearen Bewegung in eine Schwenkbewegung oder aber von einer Schwenkbewegung in eine lineare Bewegung umzustellen, ist die erfindungsgemäße Greifvorrichtung leicht modifizierbar und besonders flexibel einsetzbar.

Bei der erfindungsgemäßen Greifvorrichtung ist vorgesehen, dass der schwenkbare Greifanschluss in mindestens einer ersten und einer zweiten Position relativ zu einem Gehäuse der Greifvorrichtung angeordnet werden kann. Beispielsweise kann der schwenkbare Greifanschluss in einer ersten Position an einer Vorderwand des Gehäuses und in einer zweiten Position an einer Bodenwand des Gehäuses angeordnet werden.

Um diese flexible Anordnung des schwenkbaren Greifanschlusses am Gehäuse der Greifvorrichtung zu ermöglichen, weist das Gehäuse der Greifvorrichtung eine erste Durchtrittsöffnung für den Durchtritt des schwenkbaren Greifanschlusses in der ersten Position und eine zweite Durchtrittsöffnung für den Durchtritt des schwenkbaren Greifanschlusses in der zweiten Position auf.

In diesem Fall ist es ferner günstig, wenn die Greifvorrichtung eine Abdeckung zum Verschließen der ersten Durchtrittsöffnung oder der zweiten Durchtrittsöffnung, wenn der schwenkbare Greifanschluss an der zweiten Durchtrittsöffnung bzw. an der ersten Durchtrittsöffnung angeordnet ist, umfasst. Auf diese Weise ist gewährleistet, dass keine Verschmutzungen oder Fremdkörper von außen durch eine nicht benutzte Durchtrittsöffnung des Gehäuses in den Innenraum des Gehäuses gelangen können.

Die erfindungsgemäße Greifvorrichtung umfasst vorzugsweise einen Linearantrieb für die mindestens eine linear verschiebbare Greifbacke.

Ein solcher Linearantrieb kann insbesondere mindestens eine linear verschiebbare Antriebsstange umfassen, die an der linear verschiebbaren Greifbacke angreift.

Ferner kann der Linearantrieb mindestens einen Antriebskolben umfassen, der in einem Antriebszylinder unter Einwirkung eines hydraulischen oder pneumatischen Drucks verschiebbar ist.

Um eine besonders exakte Geradführung der Linearbewegung der Greifbacke zu erzielen, kann vorgesehen sein, dass der Linearantrieb mindestens eine Führungsstange zum Führen der Linearbewegung der linear verschiebbaren Greifbacke umfasst.

Wenn die Greifvorrichtung mindestens zwei linear verschiebbare Greifbacken aufweist, so umfasst sie vorzugsweise auch ein Synchronisationsglied zum Synchronisieren der Linearbewegung der linear verschiebbaren Greifbacken. Auf diese Weise werden beide linear verschiebbaren Greifbacken genau synchron von der Offenstellung in die Schließstellung oder in umgekehrter Richtung verschoben.

Ferner umfasst die Greifvorrichtung vorzugsweise einen Schwenkantrieb für den mindestens einen schwenkbaren Greifanschluss.

Grundsätzlich kann vorgesehen sein, dass der Schwenkantrieb ein von dem Linearantrieb für die Linearbewegung der linear verschiebbaren Greifbacke separat ausgebildeter Antrieb ist, der unabhängig von dem Linearantrieb betätigt wird.

Ein besonders einfacher Aufbau der erfindungsgemäßen Greifvorrichtung wird jedoch erzielt, wenn der Schwenkantrieb mindestens eine Bewegungswandlungsvorrichtung umfasst, welche die Linearbewegung der mindestens einen linear verschiebbaren Greifbacke in eine Schwenkbewegung des mindestens einen schwenkbaren Greifanschlusses um eine Schwenkachse wandelt. Bei dieser Ausgestaltung der Erfindung arbeitet der Schwenkantrieb also nicht unabhängig von dem Linearantrieb der Greifvorrichtung, sondern leitet die Schwenkbewegung von der Linearbewegung der linear verschiebbaren Greifbacke ab. Dadurch kann der ohnehin vorhandene Linearantrieb auch zum Antreiben der Schwenkbewegung des Greifanschlusses genutzt werden.

Bei einer bevorzugten Ausgestaltung der Erfindung ist vorgesehen, dass die Bewegungswandlungsvorrichtung mit der linear verschiebbaren Greifbacke verbunden ist.

Insbesondere kann vorgesehen sein, dass die Bewegungswandlungsvorrichtung lösbar mit der linear verschiebbaren Greifbacke verbunden ist.

Bei einer besonders bevorzugten Ausgestaltung der Erfindung ist vorgesehen, dass die Bewegungswandlungsvorrichtung wahlweise in mindestens einer ersten und einer zweiten Position relativ zu der linear verschiebbaren Greifbacke angeordnet werden kann, wobei die Richtung der Schwenkachse, um welche der schwenkbare Greifanschluss mittels der Bewegungswandlungsvorrichtung verschwenkt wird, in der zweiten Position der Bewegungswandlungsvorrichtung gegenüber der Richtung der Schwenkachse in der ersten Position der Bewegungswandlungsvorrichtung verdreht ist. Auf diese Weise ist es möglich, den Greifanschluss in zwei verschiedenen Positionen relativ zu der linear verschiebbaren Greifbacke zu benutzen; beispielsweise kann der schwenkbare Greifanschluss in einer ersten Position an einer Vorderwand der Greifvorrichtung und in einer zweiten Position an einer Bodenwand der Greifvorrichtung angeordnet sein.

Vorzugsweise ist vorgesehen, dass die Richtung der Schwenkachse in der zweiten Position der Bewegungswandlungsvorrichtung gegenüber der Richtung der Schwenkachse in der ersten Position der Bewegungswandlungsvorrichtung um einen Winkel von ungefähr 90° verdreht ist.

Zum Aufbau der Bewegungswandlungsvorrichtung wurden bislang noch keine näheren Angaben gemacht.

So kann beispielsweise vorgesehen sein, dass die Bewegungswandlungsvorrichtung einen Pleuel umfasst.

Ferner kann die Bewegungswandlungsvorrichtung einen Exzenter umfassen.

Vorteilhafterweise ist ferner vorgesehen, dass die Bewegungswandlungsvorrichtung ein Schwenklager für den schwenkbaren Greifanschluss umfasst.

Die erfindungsgemäße Greifvorrichtung ermöglicht es, das Greifprinzip durch geringe konstruktive Änderungen und einfache Umbaumaßnahmen vollständig zu verändern.

Wurden beispielsweise im Auslieferungszustand der Greifvorrichtung die Werkstücke durch eine lineare Greifbewegung gegriffen und transportiert, so können nach einem einfachen Umbau der Greifvorrichtung die Werkstücke durch Ein- oder Anschwenken gegriffen und fixiert werden.

Die erfindungsgemäße Greifvorrichtung eignet sich insbesondere zum Einsatz bei Roboteranwendungen in einer industriellen Reinigungsanlage.

Weitere Merkmale und Vorteile der Erfindung sind Gegenstand der nachfolgenden Beschreibung und der zeichnerischen Darstellung eines Ausführungsbeispiels.

### In den Zeichnungen zeigen:

- Fig. 1: eine schematische Seitenansicht eines Roboters mit einer Greifvorrichtung mit linear verschiebbaren Greifelementen, an denen ein Werkstück gehalten ist;
- Fig. 2: eine schematische Draufsicht von oben auf den Roboter mit Werkstück aus Fig. 1;
- Fig. 3: eine schematische Vorderansicht der Greifvorrichtung des Roboters aus den Fig. 1 und 2, wobei linear verschiebbare Greifbacken der Greifvorrichtung sich in einer Schließstellung befinden;
- Fig. 4: eine der Fig. 3 entsprechende schematische Vorderansicht der Greifvorrichtung, wobei die linear verschiebbaren Greifbacken sich in einer Offenstellung befinden;
- Fig. 5: eine schematische perspektivische Darstellung der Greifvorrichtung, mit abgenommenen linear verschiebbaren Greifelementen;
- Fig. 6: eine schematische perspektivische Darstellung der Greifvorrichtung aus Fig. 5, wobei ein rechtes Seitenteil der Greifvorrichtung und eine rechte Greifbacke der Greifvorrichtung teilweise weggebrochen sind, um im Inneren des Seitenteils und der Greifbacke angeordnete Elemente der Greifvorrichtung sichtbar zu machen;
- Fig. 7: eine schematische perspektivische Darstellung der Greifvorrichtung in einem zweiten Betriebszustand, in welchem an der Vorderseite der Greifvorrichtung zwei schwenkbare Greifanschlüsse angeordnet sind;
- Fig. 8: eine schematische perspektivische Darstellung der Greifvorrichtung aus Fig. 7, wobei das rechte Seitenteil und die rechte Greifbacke der Greifvorrichtung teilweise weggebrochen sind, um im Inneren des Seitenteils und der Greifbacke angeordnete Elemente der Greifvorrichtung sichtbar zu machen;
- Fig. 9: eine schematische Seitenansicht der Greifvorrichtung aus den Fig. 7 und 8, mit der Blickrichtung in Richtung des Pfeiles 9 in Fig. 7;
- Fig. 10: einen schematischen horizontalen Längsschnitt durch die Greifvorrichtung aus Flug. 9, längs der Linie 10-10 in Fig. 9;
- Fig. 11: eine schematische Vorderansicht der Greifvorrichtung aus den Fig. 7 bis 10;
- Fig. 12: einen schematischen vertikalen Querschnitt durch die Greifvorrichtung aus Fig. 11, längs der Linie 12-12 in Fig. 11;
- Fig. 13: einen schematischen horizontalen Längsschnitt durch die Greifvorrichtung aus Fig. 11, längs der Linie 13-13 in Fig. 11;
- Fig. 14: einen schematischen vertikalen Längsschnitt durch die Greifvorrichtung aus Fig. 9, längs der Linie 14-14 in Fig. 9;
- Fig. 15: einen schematischen vertikalen Querschnitt durch die Greifvorrichtung aus Fig. 11, längs der Linie 15-15 in Fig. 11;
- Fig. 16: eine schematische perspektivische Darstellung der Greifvorrichtung in einem dritten Betriebszustand, in welchem zwei schwenkbare Greifanschlüsse an einer Unterseite der Greifvorrichtung angeordnet sind; und
- Fig. 17: eine schematische perspektivische Darstellung der Greifvorrichtung aus Fig. 16, wobei das rechte Seitenteil und die rechte linear verschiebbare Greifbacke der Greifvorrichtung teilweise weggebrochen sind, um im Inneren des Seitenteils und der Greifbacke angeordnete Elemente der Greifvorrichtung sichtbar zu machen.

Gleiche oder funktional äquivalente Elemente sind in allen Figuren mit denselben Bezugszeichen bezeichnet.

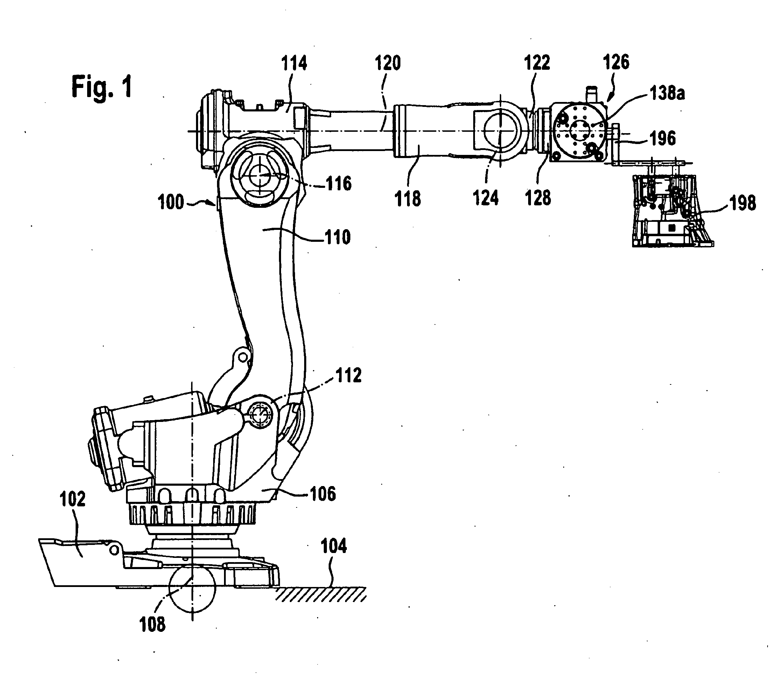

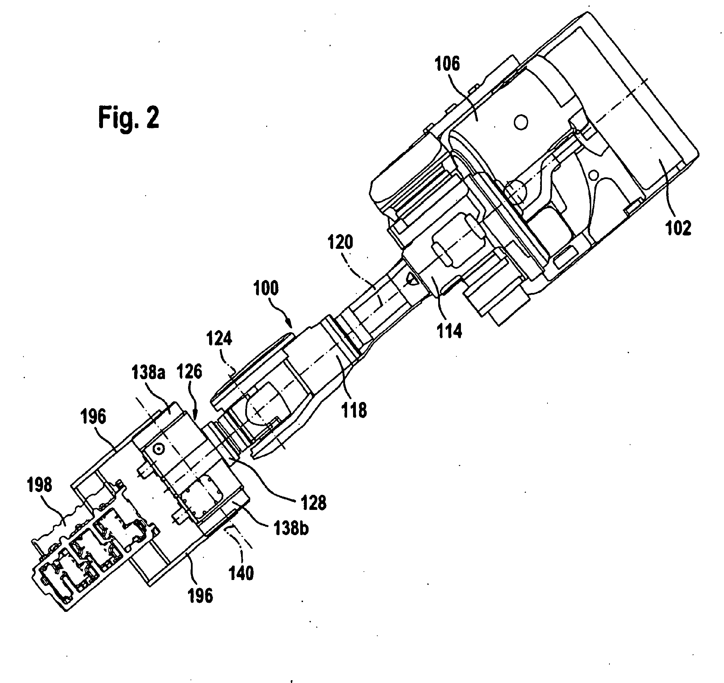

Ein in den Fig. 1 und 2 dargestellter, als Ganzes mit 100 bezeichneter Roboter umfasst einen Sockel 102, mit welchem der Roboter 100 an einem Untergrund 104 festgelegt ist, und ein Basisglied 106, welches mittels eines Drehantriebs um eine vertikale Drehachse 108 relativ zu dem Sockel 102 drehbar ist.

An dem Basisglied 106 ist ein erstes Schwenkglied 110 des Roboters 100 mittels eines Schwenkantriebs um eine horizontale erste Schwenkachse 112 schwenkbar gehalten.

An einem dem Basisglied 106 abgewandten Ende des ersten Schwenkglieds 110 ist ein zweites Schwenkglied 114 mittels eines weiteren Schwenkantriebs um eine horizontale zweite Schwenkachse 116 schwenkbar an dem ersten Schwenkglied 110 gehalten..

An dem zweiten Schwenkglied 114 ist ein Drehglied 118 mittels eines Drehantriebs um seine als zweite Drehachse 120 dienende Längsachse drehbar gehalten.

An dem dem zweiten Schwenkglied 114 abgewandten Ende des Drehglieds 118 ist ein drittes Schwenkglied 122 um eine senkrecht zur zweiten Drehachse 120 verlaufende dritte Schwenkachse 124 schwenkbar gehalten.

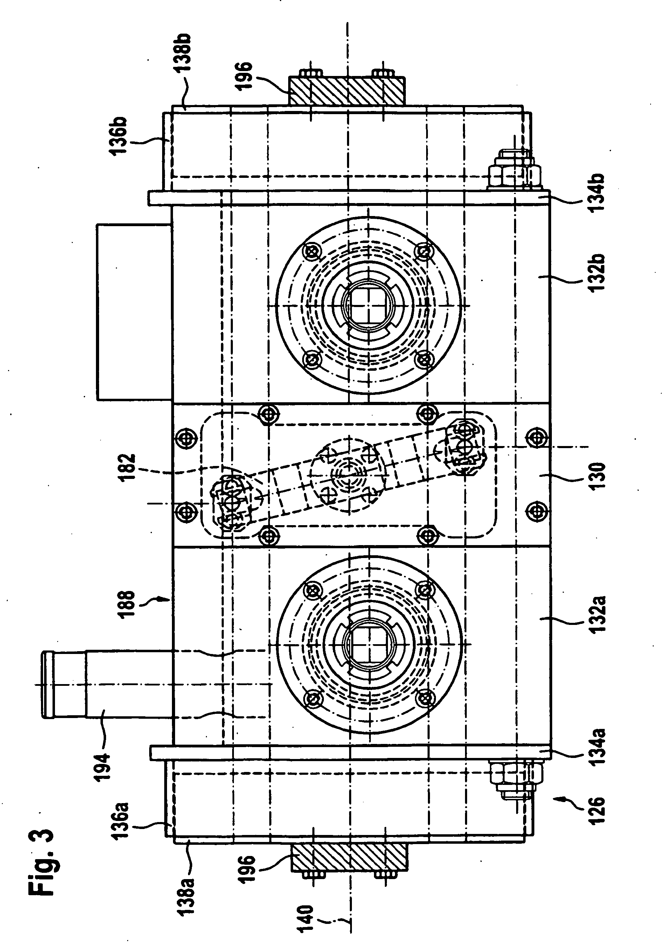

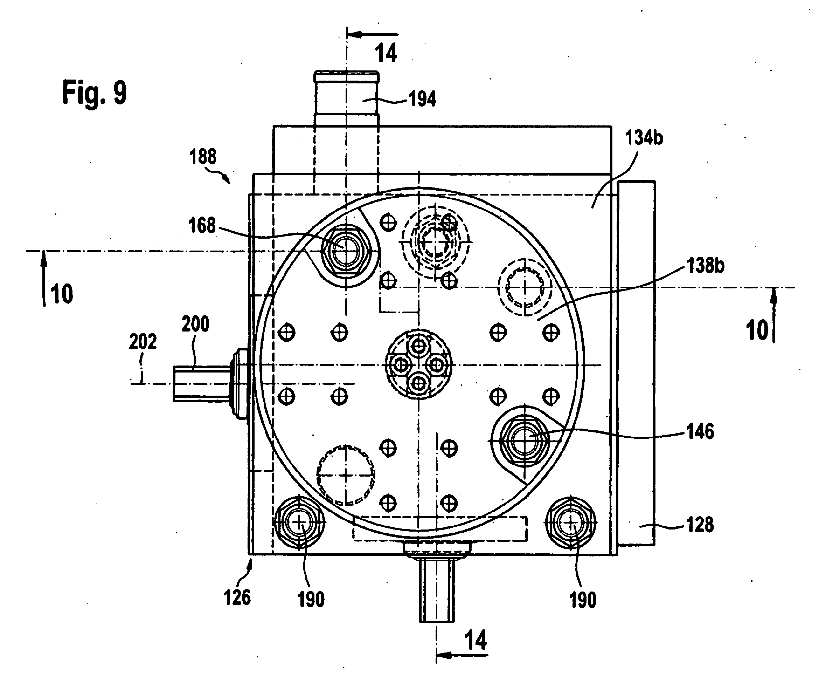

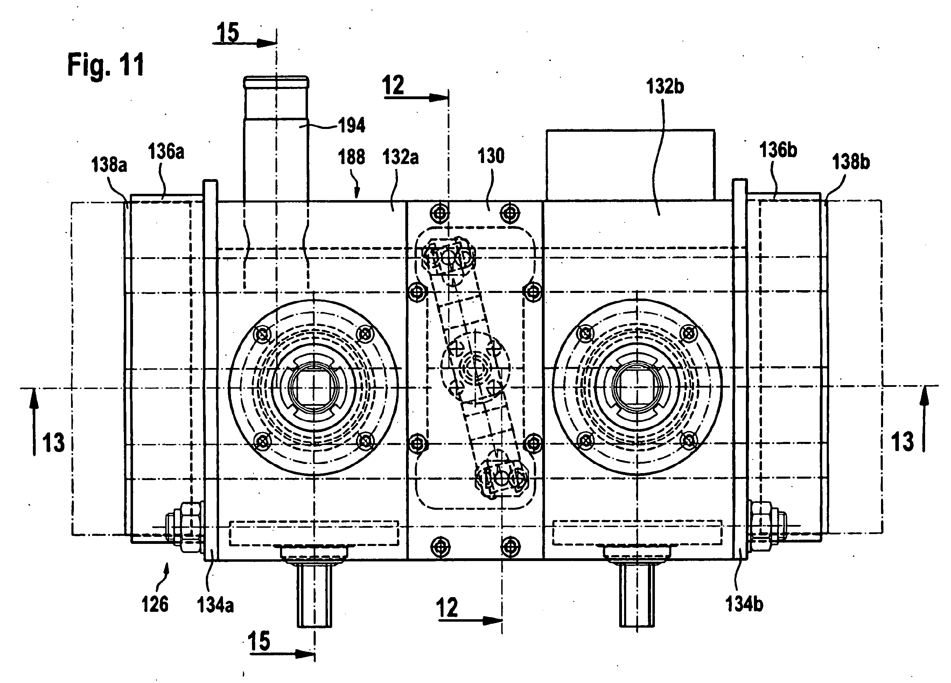

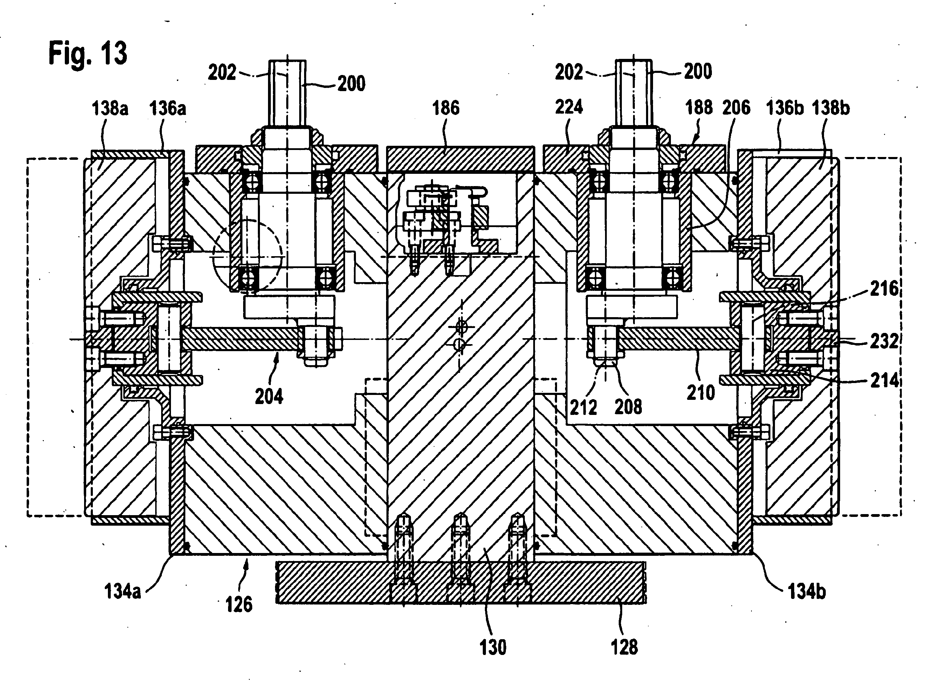

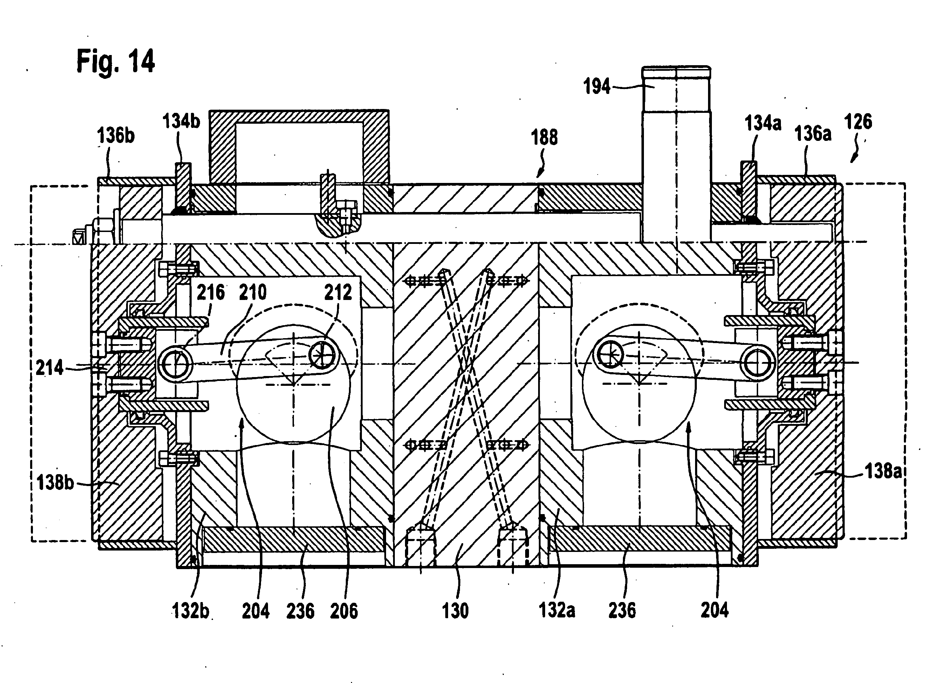

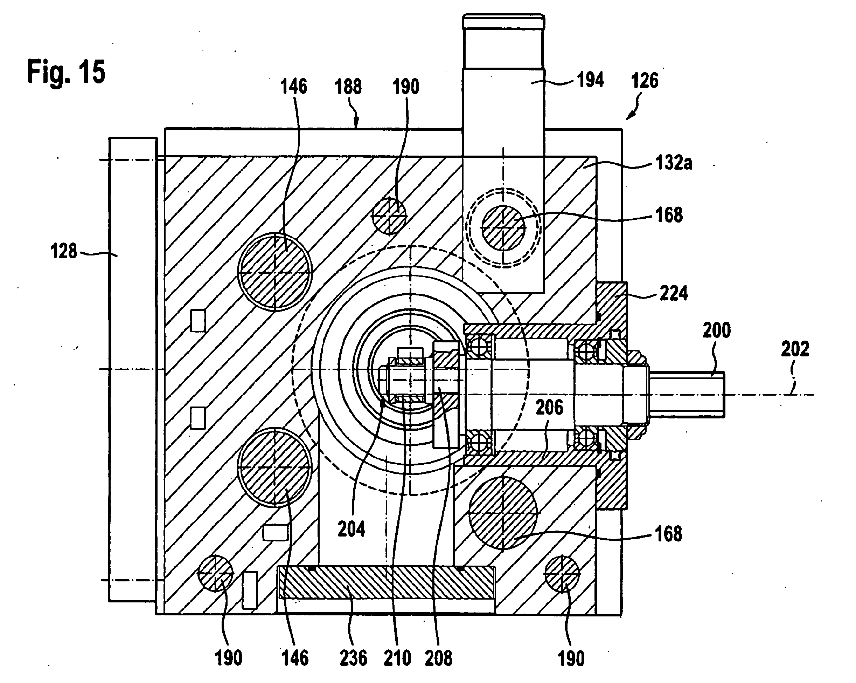

An das freie Ende des dritten Schwenkgliedes 122 ist eine als Ganzes mit 126 bezeichnete, in den Fig. 3 bis 17 dargestellte Greifvorrichtung 126 mittels eines Anschlussflansches 128 angeflanscht.

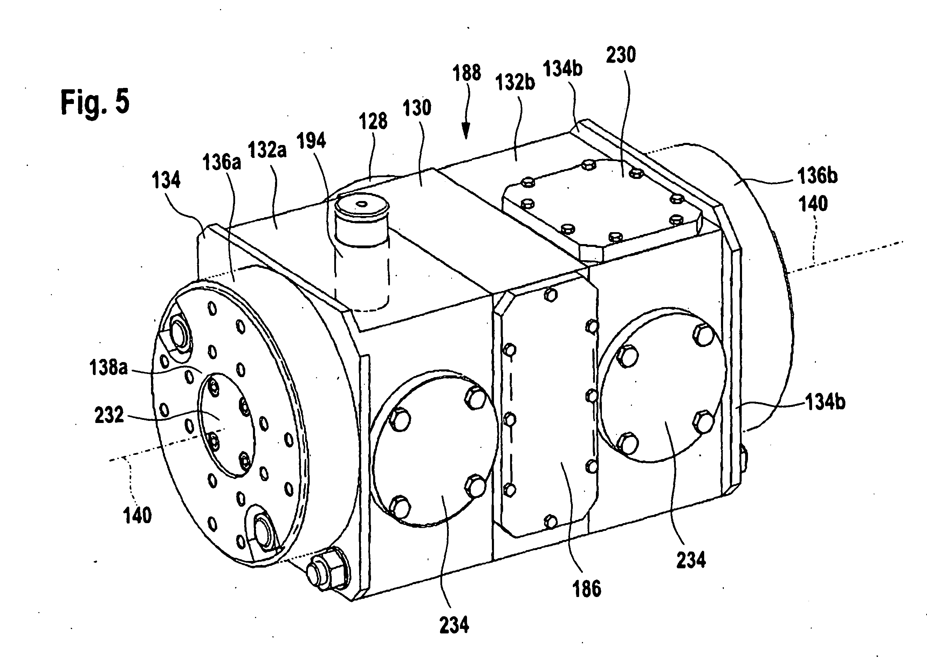

Wie am besten aus Fig. 5 zu ersehen ist, umfasst die Greifvorrichtung 126 ein im wesentlichen quaderförmiges Mittelteil 130, das zwischen einem im wesentlichen quaderförmigen linken Seitenteil 132a und einem im wesentlichen quaderförmigen rechten Seitenteil 132b angeordnet ist.

An jedes der beiden Seitenteile 132a, 132b schließt sich jeweils eine Endplatte 134a bzw. 134b an, welche jeweils eine hohlzylindrische Aufnahme 136a bzw. 136b für jeweils eine im wesentlichen zylindrische linke Greifbacke 138a bzw. rechte Greifbacke 138b trägt.

Jede der Greifbacken 138a, 138b ist relativ zu der jeweils zugeordneten Aufnahme 136a, 136b parallel zu der Längsachse 140 der Greifvorrichtung 126 linear verschiebbar, und zwar mittels eines im folgenden noch näher zu beschreibenden Linearantriebs 142.

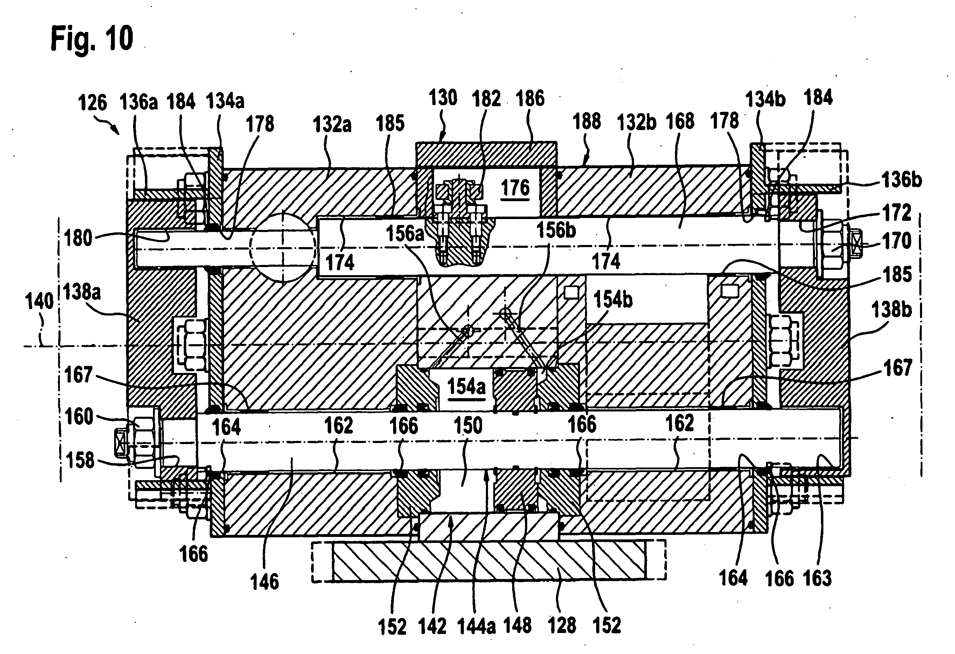

Wie am besten aus Fig. 10 zu ersehen ist, umfasst der Linearantrieb 142 für jede der linear verschiebbaren Greifbacken 138a, 138b jeweils einen Antriebskolben 144a, 144b, welcher eine Kolbenstange 146 und einen die Kolbenstange 146 ringförmig umgebenden, in radialer Richtung abstehenden und ungefähr in der Mitte der Kolbenstange 146 angeordneten Bund 148 umfasst, welcher in einem in dem Mittelteil 130 der Greifvorrichtung 126 vorgesehenen Zylinder 150 in der Längsrichtung der Kolbenstange 146 verschiebbar geführt ist.

Jeder Zylinder 150 ist an seinem linken Ende und seinem rechten Ende mit jeweils einer Dichtungspackung 152 versehen, welche den Innenraum des Zylinders 150 fluiddicht abdichtet.

Durch den Bund 148 des Antriebskolbens 144a bzw. 144b ist der Innenraum jedes Zylinders 150 in einen linken Teilraum 154a und einen rechten Teilraum 154b unterteilt, wobei über einen Luftsteuerkanal 156a unter Druck stehende Luft dem linken Teilraum 154a und über einen Luftsteuerkanal 156b unter Druck stehende Luft dem rechten Teilraum 154b zugeführt werden kann.

Beide Luftsteuerkanäle 156a, 156b sind jeweils mit einer (nicht dargestellten) Pneumatikleitung verbunden.

Ein Ende der Kolbenstange 146 erstreckt sich durch eine Durchtrittsöffnung 158 in der von dem betreffenden Antriebskolben 144a bzw. 144b angetriebenen Greifbacke 138a bzw. 138b hindurch und ist mittels einer Mutter 160 mit derselben verschraubt.

Das entgegengesetzte Ende der Kolbenstange 146 ist in einer Sackbohrung 163, welche in der jeweils gegenüberliegenden Greifbacke 138b bzw. 138a vorgesehen ist, in ihrer Längsrichtung relativ zu dieser Greifbacke 138b bzw. 138a verschiebbar geführt.

Ferner erstreckt sich die Kolbenstange 146 durch zylindrische Kanäle 162 in den beiden Seitenteilen 132a, 132b der Greifvorrichtung 126 und durch kreisförmige Durchtrittsöffnungen 164 in den Endplatten 134a, 134b hindurch.

Dabei ist die Kolbenstange 146 gegen die Endplatten 134a, 134b und gegen die Dichtungspackungen 152 mittels Dichtringen 166. abgedichtet und mittels Gleithülsen 167 in den Kanälen 162 geführt.

Dadurch, dass die beiden Teilräume 154a, 154b des Zylinders 150 abwechselnd mit Druckluft-beaufschlagt werden, wird jeder Antriebskolben 144a, 144b aufgrund der auf den jeweiligen Bund 148 einwirkenden Druckkräfte in seiner Längsrichtung relativ zu der jeweils zugeordneten Aufnahme 136a bzw. 136b hin verschoben.

Wird beispielsweise der in Fig. 10 links dargestellte Teilraum 154a mit Druckluft beaufschlagt, so wird der Antriebskolben 144a in die in Fig. 10 dargestellte Schließstellung bewegt, in welcher die Greifbacke 138a in der zugehörigen Aufnahme 136a aufgenommen ist.

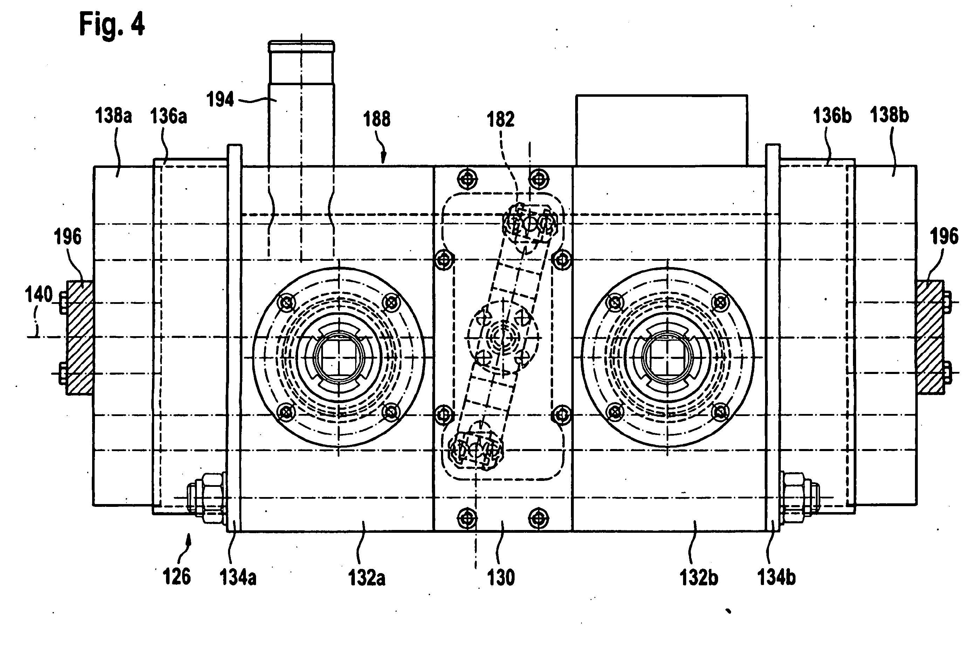

Wenn nun der in Fig. 10 rechts dargestellte Teilraum 154b mit der Druckluft beaufschlagt wird, so wird der Antriebskolben 144a nach links bewegt, und die Greifbacke 138a bewegt sich aus der Schließstellung in die in Fig. 4 dargestellte Offenstellung, in welcher die Greifbacke 138a sich zum größten Teil außerhalb der Aufnahme 136a befindet:
Dabei werden die Antriebskolben 144a, 144b jeweils gegensinnig mit Druckluft beaufschlagt, so dass sich die Antriebskolben 144a, 144b stets entgegengesetzt parallel zueinander bewegen und somit die Greifbacken 138a, 138b synchron zueinander in die jeweilige Schließstellung bzw. in die jeweilige Offenstellung bewegt werden.

Um zu erreichen, dass sich die Greifbacken 138a, 138b möglichst exakt parallel zu der Längsachse 140 der Greifvorrichtung 126 bewegen, ist jede der Greifbacken 138a, 138b ferner mit jeweils einer Führungsstange 168 verbunden, welche an einem ihrer Enden mittels einer Mutter 170 mit der jeweils zugeordneten Greifbacke 138a bzw. 138b verschraubt ist und sich von diesem Ende aus durch eine Durchtrittsöffnung 172 in der betreffenden Greifbacke 138a, 138b, durch im wesentlichen zylindrische Kanäle 174 in den Seitenteilen 132a, 132b, durch eine Synchronisationskammer 176 in dem Mittelteil 130 und durch Durchtrittsöffnungen 178 in den Endplatten 134a, 134b hindurch erstreckt und deren der Mutter 170 abgewandtes freies Ende in einer zylindrischen Sackbohrung 180, die in der nicht an der betreffenden Führungsstange 168 festgelegten Greifbacke 138a bzw. 138b vorgesehen ist, in ihre Längsrichtung verschiebbar geführt ist (siehe insbesondere Fig. 10).

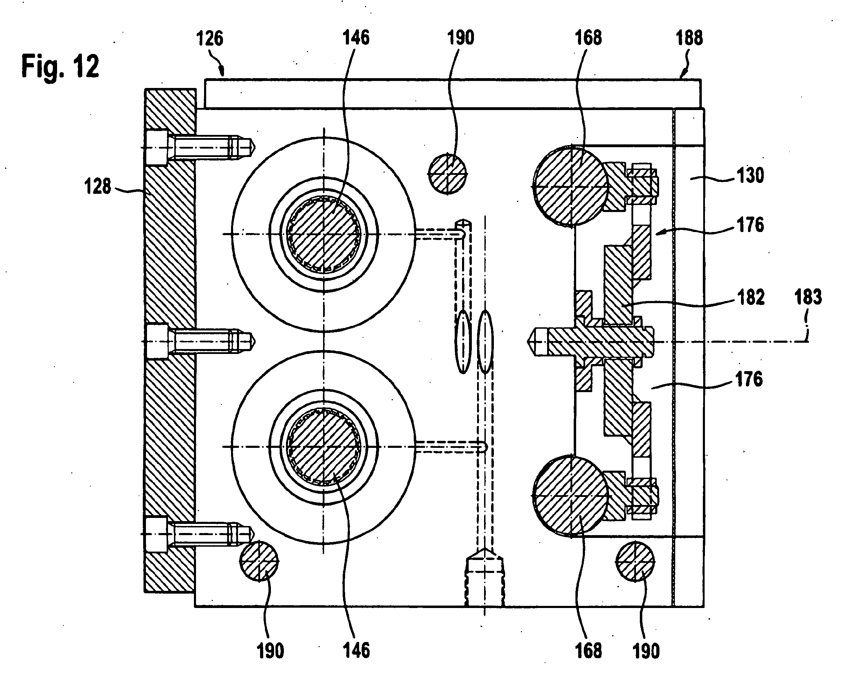

Die beiden Führungsstangen 168, welche an den Greifbacken 138a bzw. 138b befestigt sind, sind untereinander mittels eines Synchronisationsgliedes 182 verbunden, das um eine senkrecht zu den Längsrichtungen der Führungsstangen 168 verlaufende Schwenkachse 183 schwenkbar in der Synchronisationskammer 176 angeordnet und an seinen beiden freien Enden jeweils gelenkig mit einer der Führungsstangen 168 verbunden ist, so dass sich die beiden Führungsstangen 168 nur um jeweils gleiche Strecken in einander entgegengesetzte, zueinander parallele Richtungen bewegen können (siehe insbesondere Fig. 12).

Durch das Synchronisationsglied 182 ist somit sichergestellt, dass die entgegengesetzt gerichtete Linearbewegung der Greifbacken 138a und 138b stets genau synchron zueinander erfolgt.

Die Führungsstangen 168 sind mittels Dichtringen 184 gegen die Endplatten 134a, 134b abgedichtet und mittels Gleithülsen 185 in den Kanälen 174 geführt.

Die Synchronisationskammer 176 ist zur Außenseite der Greifvorrichtung 126 hin mittels einer Abdeckplatte 186 verschlossen, welche mittels geeigneter Befestigungsmittel lösbar an dem Mittelteil 130 der Greifvorrichtung 126 festgelegt ist.

Um das aus dem Mittelteil 130, den Seitenteilen 132a, 132b und den Endplatten 134a, 134b zusammengesetzte Gehäuse 188 der Greifvorrichtung 126 zusammenzuhalten, sind ferner mehrere, beispielsweise drei, Verbindungsstäbe 190 vorgesehen, welche sich durch die vorstehend genannten Bestandteile des Gehäuses 188 hindurch erstrecken und an ihren freien Enden mit Außengewinden versehen sind, in welche Spannmuttern 192 eingedreht sind, um die Endplatten 134a, 134b sowie die zwischen den Endplatten angeordneten Seitenteile 132a, 132b und das Mittelteil 130 gegeneinander zu verspannen.

Ferner ist das Gehäuse 188 der Greifvorrichtung 126 mit einer Entlüftungseinrichtung 194 versehen, welche an der Oberseite des linken Seitenteils 132a angeordnet ist.

In den Fig. 1 bis 4 ist die Greifvorrichtung 126 in einem ersten Betriebszustand dargestellt, in welchem an der Außenseite jeder Greifbacke 138a, 138b jeweils ein Greifelement 196 lösbar festgelegt ist, wobei die einander gegenüberstehenden Greifelemente 196 durch den Linearantrieb 142 der Greifbacken 138a, 138b in Richtung der Längsachse 140 der Greifvorrichtung 126 aufeinander zu in eine Schließstellung oder voneinander weg in eine Offenstellung bewegt werden können.

Dabei kann vorgesehen sein, dass die Greifelemente 196 ein zu ergreifendes Werkstück in der Schließstellung ergreifen und in der Offenstellung freigeben; alternativ hierzu könnten aber die Greifelemente 196 auch so ausgebildet und relativ zu dem Werkstück angeordnet sein, dass das Werkstück in der Offenstellung der Greifelemente 196 ergriffen und in der Schließstellung der Greifelemente 196 freigegeben wird.

In der in den Fig. 1 und 2 dargestellten Schließstellung der Greifelemente 196 halten die Greifelemente 196 ein zwischen denselben angeordnetes Werkstück 198, welches durch Bewegen der Greifelemente 196 in die Offenstellung freigegeben werden kann.

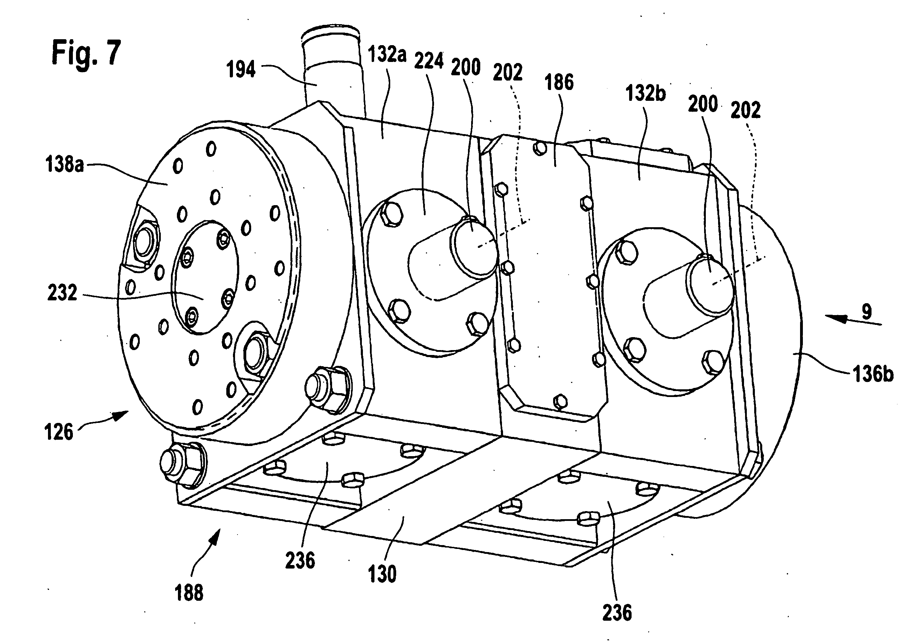

Aus diesem ersten Betriebszustand ist die Greifvorrichtung 126 durch eine einfache Umbaumaßnahme in den in den Fig. 7 bis 15 dargestellten zweiten Betriebszustand überführbar, in welchem zusätzlich zu den linear verschiebbaren Greifbacken 138a, 138b an der Vorderseite der Greifvorrichtung 126 zwei schwenkbare Greifanschlüsse 200 angeordnet sind.

Diese Greifanschlüsse 200 sind um ihre parallel zueinander verlaufenden Schwenkachsen 202 gegensinnig zueinander verschwenkbar und jeweils mit einem (nicht dargestellten) Greifelement verbindbar, so dass diese Greifelemente durch die gegensinnigen Schwenkbewegungen der Greifanschlüsse- 200 aufeinander zu in eine Schließstellung oder voneinander weg in eine Offenstellung bewegt werden können.

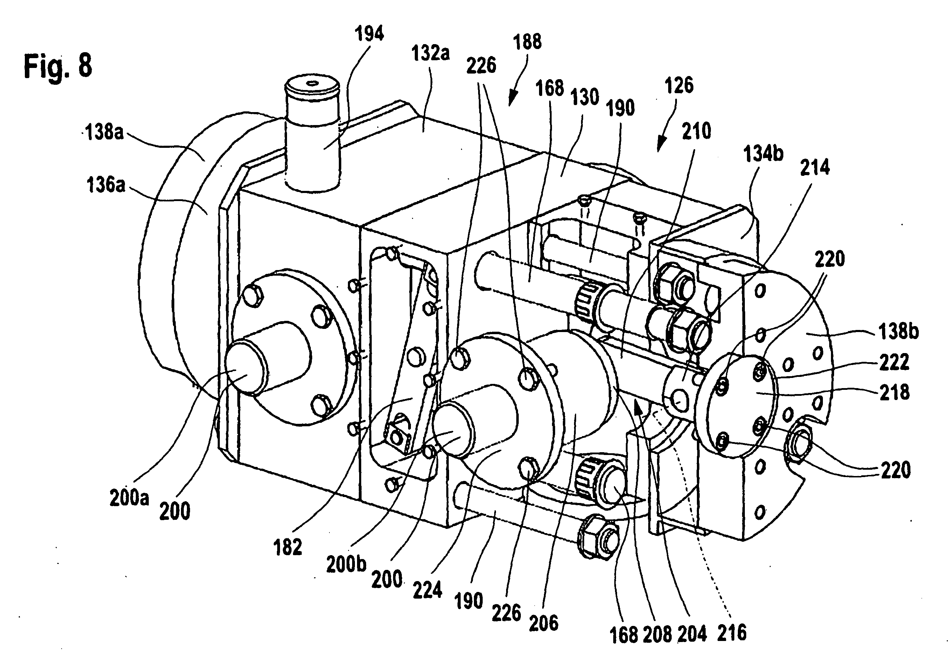

Für den Antrieb der Schwenkbewegung der Greifanschlüsse 200 ist klein separater Schwenkantrieb erforderlich; vielmehr wird die Schwenkbewegung der Greifanschlüsse 200 mittels einer Bewegungswandlungsvorrichtung 204 von der Linearbewegung der Greifbacken 138a, 138b abgeleitet (siehe insbesondere Fig. 8).

Jede der Bewegungswandlungsvorrichtungen 204 umfasst jeweils ein im wesentlichen hohlzylindrisches Schwenklager 206 für den jeweils zugeordneten, im wesentlichen zylindrischen Greifanschluss 200, einen drehfest mit einem Ende des Greifanschlusses 200 verbundenen Exzenter 208, einen Pleuel 210, der an einer gegenüber der Schwenkachse 202 des Greifanschlusses 200 und des Exzenters 208 radial nach außen versetzten Stelle um eine erste Schwenkachse 212 schwenkbar mit dem Exzenter 208 verbunden ist und sich in einer senkrecht zu der Schwenkachse 202 verlaufenden Richtung von dem Exzenter 208 weg erstreckt, und ein im wesentlichen zylindrisches Anschlussteil 214, an dem das dem Exzenter 208 abgewandte Ende des Pleuels 210 um eine parallel zur ersten Schwenkachse 212 verlaufende zweite Schwenkachse 216 schwenkbar gehalten ist und welches einen radial nach außen abstehenden Anschlussflansch 218 aufweist, welcher mit mehreren, beispielsweise mit vier, Durchtrittsöffnungen für Befestigungsmittel 220 versehen ist.

Die jeweils zugeordnete Greifbacke 138a bzw. 138b weist jeweils eine mittige, im wesentliche zylindrische Vertiefung 222 auf, die im montierten Zustand der Bewegungswandlungsvorrichtung 204 den Anschlussflansch 218 aufnimmt, welcher mittels der Befestigungsmittel 220 lösbar an der betreffenden Greifbacke 138a, 138b festgelegt ist.

Von der Vertiefung 222 aus erstreckt sich das Anschlussteil 214 durch eine Durchgangsöffnung in der betreffenden Greifbacke 138a, 138b hindurch in den Innenraum des jeweils benachbarten Seitenteils 132a bzw. 132b.

Das Schwenklager 206 der jeweiligen Bewegungswandlungsvorrichtung 204 erstreckt sich im montierten Zustand derselben durch eine Durchtrittsöffnung in der Vorderwand des jeweils zugeordneten Seitenteils 132a bzw. 132b hindurch und liegt mit einem in radialer Richtung von dem Schwenklager 206 abstehenden Anschlussflansch 224 von außen an der Vorderseite des betreffenden Seitenteils 132a bzw. 132b an.

Dieser Anschlussflansch 224 weist mehrere, beispielsweise vier, Durchtrittsöffnungen auf, durch die sich Befestigungsmittel 226 hindurch erstrecken, mittels welcher der Anschlussflansch 224 lösbar an dem betreffenden Seitenteil 132a bzw. 132b festgelegt ist.

Zur Demontage der Bewegungswandlungsvorrichtung 204 kann im Innenraum des jeweils zugeordneten Seitenteils 132a, 132b der Exzenter 208 von dem Greifanschluss 200 gelöst werden.

Anschließend können der Exzenter 208, der Pleuel 210 und das Anschlussteil 214 durch die Durchtrittsöffnung in der jeweils zugeordneten Greifbacke 138a, 138b entnommen werden, nachdem die Befestigung des Anschlussflansches 218 an der Greifbacke 138a bzw. 138b gelöst worden ist.

Ferner können das Schwenklager 206 und der darin schwenkbar gelagerte Greifanschluss 200 durch die Durchtrittsöffnung in der Vorderwand des jeweils zugeordneten Seitenteils 132a, 132b entnommen werden, nachdem die Befestigung des Anschlussflansches 224 an der Vorderwand des Seitenteils 132a bzw. 132b gelöst worden ist.

Die Montage der Bewegungswandlungsvorrichtung 204 erfolgt unter Umkehrung der vorstehend genannten Schritte zur Demontage.

Um die erforderlichen Montage- bzw. Demontagearbeiten im Innenraum des jeweils zugeordneten Seitenteils 132a, 132b durchführen zu können, sind die Seitenteile 132a, 132b jeweils mit Zugangsöffnungen 228 versehen, die mittels jeweils einer Abdeckplatte 230 (siehe Fig. 5) verschließbar sind.

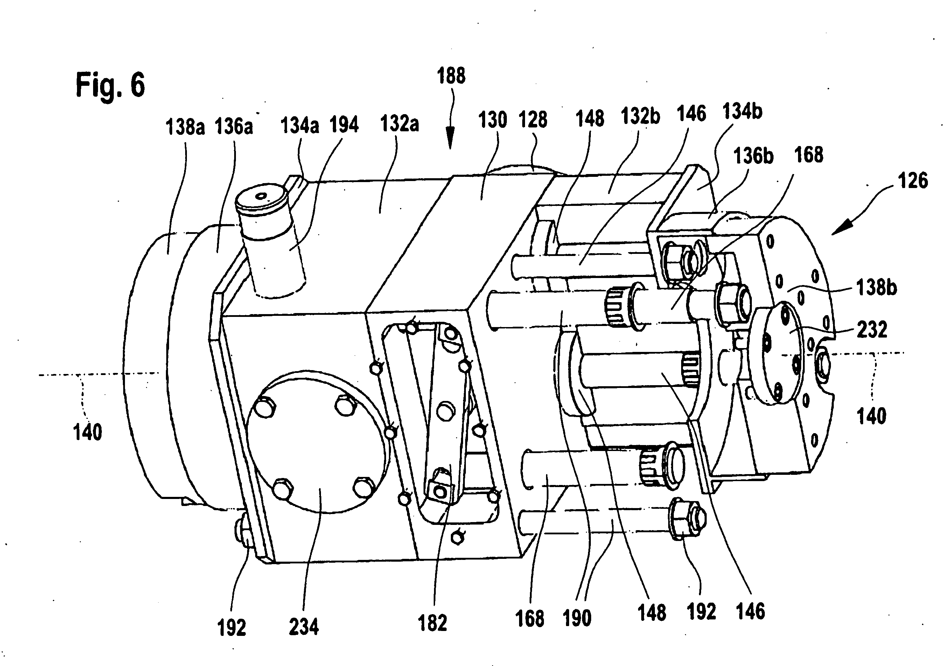

Im ersten Betriebszustand, in welchem die Bewegungswandlungsvorrichtungen 204 nicht montiert sind, sind die Durchtrittsöffnungen in den Greifbacken 138a, 138b sowie an den Vorderwänden der Seitenteile 132a, 132b durch Deckel 232 bzw. 234 verschlossen, welche mittels Befestigungsmitteln lösbar an den Greifbacken 138a, 138b bzw. an den Seitenteilen 132a, 132b festgelegt sind (siehe die Fig. 5 und 6).

Im zweiten Betriebszustand der Greifvorrichtung 126 wird eine Schwenkbewegung der Greifanschlüsse 200 durch eine Linearbewegung der Greifbacken 138a, 138b mittels der Bewegungswandlungsvorrichtungen 204 bewirkt, da beispielsweise bei einer Bewegung der Greifbacken 138a, 138b längs der Längsachse 140 in die Offenstellung der anschlussteilseitige Anlenkpunkt des Pleuels 210 längs der Längsachse 140 nach außen bewegt wird, was eine Schwenkbewegung des gelenkig mit dem jeweils anderen Ende des Pleuels 210 verbundenen Exzenters 208 um dessen Schwenkachse 202 zur Folge hat. Somit wird auch der drehfest mit dem Exzenter 208 verbundene Greifanschluss 200 um die Schwenkachse 202 geschwenkt.

Wie aus Fig. 8 zu ersehen ist, wird dann, wenn sich die Greifbacken 138a, 138b unter der Wirkung des Linearantriebs 142 nach außen in die Offenstellung bewegen, der rechte Greifanschluss 200b (von der Vorderseite der Greifvorrichtung 126 aus gesehen) im Uhrzeigersinn und der linke Greifanschluss 200 im Gegenuhrzeigersinn verschwenkt.

Die (nicht dargestellten) Greifelemente, welche mit den Greifanschlüssen 200 verbunden sind, führen aufgrund der Schwenkbewegung der Greifanschlüsse 200 ebenfalls eine Schwenkbewegung aus, wobei diese Schwenkbewegung je nach Ausgestaltung der Greifelemente und je nach deren Anordnung an den Greifanschlüssen 200 in eine Schließstellung oder in eine Offenstellung der Greifelemente führen kann.

Der Bewegung der Greifbacken 138a, 138b in die Offenstellung kann also eine Bewegung der Greifelemente an den Greifanschlüssen 200 in eine Offenstellung oder in eine Schließstellung entsprechen.

Umgekehrt kann einer Bewegung der Greifbacken 138a, 138b in die Schließstellung eine Bewegung der an den Greifanschlüssen 200 angeordneten Greifelemente in eine Schließstellung oder in eine Offenstellung entsprechen.

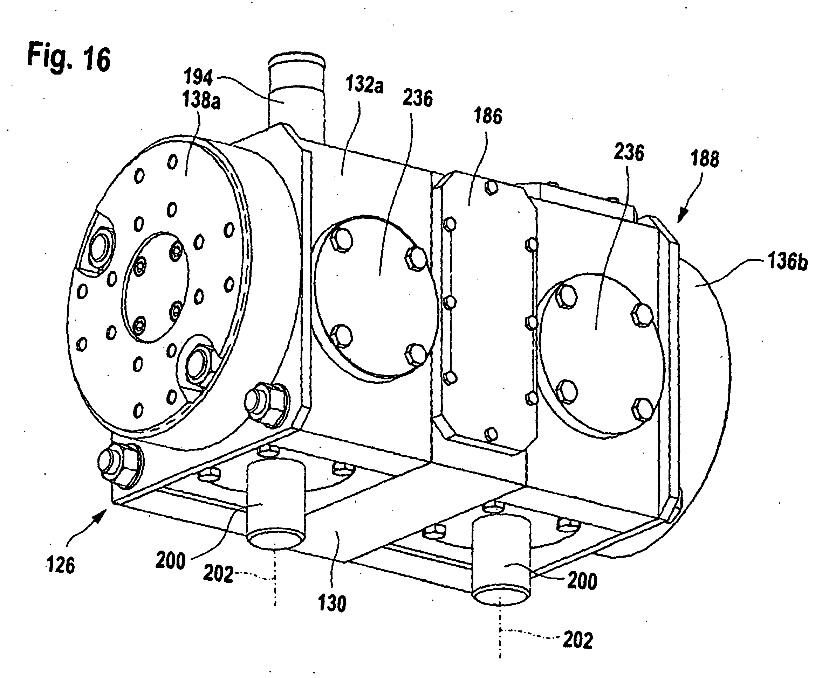

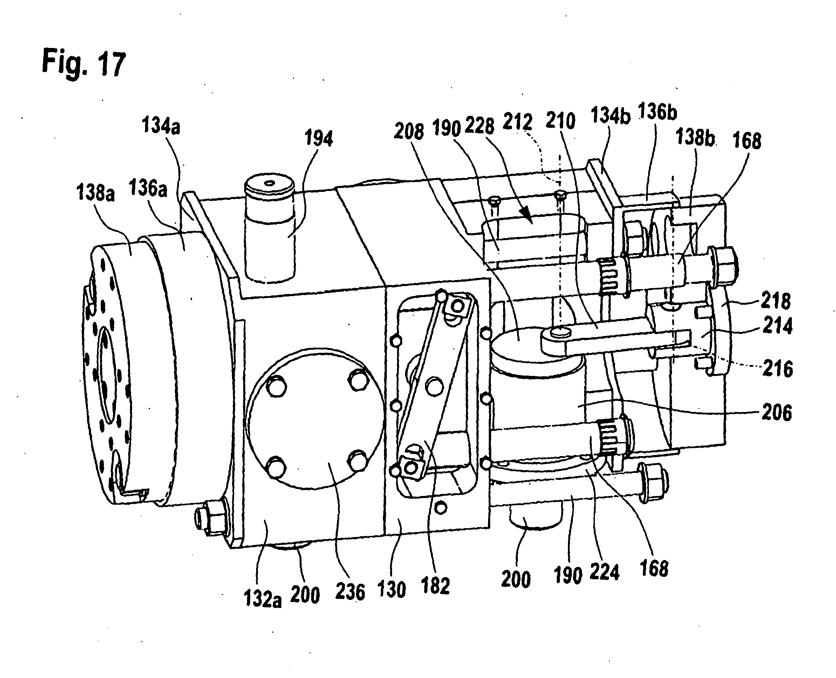

Der in den Fig. 16 und 17 dargestellte dritte Betriebszustand der Greifvorrichtung 126 unterscheidet sich von dem in den Fig. 7 bis 15 dargestellten zweiten Betriebszustand lediglich dadurch, dass die Greifanschlüsse 200 nicht an der Vorderseite der Greifvorrichtung 126, sondern stattdessen an deren Unterseite, also in einer gegenüber dem zweiten Betriebszustand um 90° gedrehten Position, angeordnet sind.

Um diesen dritten Betriebszustand der Greifvorrichtung 126 nutzen zu können, sind die Seitenteile 132a, 132b an ihren Bodenwänden ebenfalls mit Durchtrittsöffnungen für die Schwenklager 206 der Bewegungswandlungsvorrichtungen 204 versehen wie an deren Vorderwänden.

Im ersten Betriebszustand und im zweiten Betriebszustand sind diese unteren Durchtrittsöffnungen durch Deckel 236 verschlossen (siehe Fig. 7), welche mittels Befestigungsmitteln lösbar an der Bodenwand der Seitenteile 132a, 132b festgelegt sind.

Um die Greifvorrichtung 126 von dem zweiten Betriebszustand in den dritten Betriebszustand zu überführen, müssen lediglich die Bewegungswandlungsvorrichtungen 204 relativ zu dem Gehäuse 188 der Greifvorrichtung, 126 um einen Winkel von 90° gedreht werden.

Hierzu ist es lediglich erforderlich, die Verbindung zwischen dem Exzenter 208 und dem jeweils zugeordneten Greifanschluss 200 zu lösen, das Schwenklager 206 mit dem Greifanschluss 200 durch die Durchtrittsöffnung an der Vorderseite des jeweiligen Seitenteils 132a bzw. 132b zu entnehmen, diese Durchtrittsöffnung mittels des Deckels 234 zu verschließen, den Anschlussflansch 218 des Anschlussteils 214 von der jeweiligen Greifbacke 138a, 138b zu lösen, um einen Winkel von 90° zu drehen und in der gedrehten Position wieder lösbar an der betreffenden Greifbacke 138a bzw. 138b festzulegen, den Deckel 236 von der Durchtrittsöffnung in der Bodenwand des jeweiligen Seitenteils 132a bzw. 132b zu lösen, das Schwenklager 206 mit dem Greifanschluss 200 durch die so freigegebene Durchtrittsöffnung einzuführen und in dieser neuen Position die Verbindung des Exzenters 208 mit dem Greifanschluss 200 wiederherzustellen.

Nach Durchführung dieser Umbauarbeiten kann eine Schwenkbewegung der nunmehr an der Unterseite der Greifvorrichtung 126 angeordneten Greifanschlüsse 200 in derselben Weise mittels der Bewegungswandlungsvorrichtungen 204 aus der Linearbewegung der Greifbacken 138a, 138b abgeleitet werden, wie dies vorstehend im Zusammenhang mit dem zweiten Betriebszustand der Greifvorrichtung 126 bereits beschrieben worden ist.

## Patentansprüche

1. Greifvorrichtung für einen Roboter (100) oder einen Portallader, umfassend mindestens eine linear verschiebbare Greifbacke (138a, 138b) und mindestens einen schwenkbaren Greifanschluss (200),
**dadurch gekennzeichnet,**
**dass** der mindestens eine schwenkbare Greifanschluss (200) in mindestens einer ersten und einer zweiten Position relativ zu einem Gehäuse (188) der Greifvorrichtung (126) angeordnet werden kann und dass das Gehäuse (188) der Greifvorrichtung (126) eine erste Durchtrittsöffnung für den Durchtritt des schwenkbaren Greifanschlusses (200) in der ersten Position und eine zweite Durchtrittsöffnung für den Durchtritt des schwenkbaren Greifanschlusses- (200) in der zweiten Position aufweist.

2. Greifvorrichtung nach Anspruch 1, **dadurch gekennzeichnet, dass** die Greifvorrichtung (126) einen Linearantrieb (142) für die mindestens eine linear verschiebbare Greifbacke (138a, 138b) umfasst.

3. Greifvorrichtung nach Anspruch 2, **dadurch gekennzeichnet, dass** der Linearantrieb (142) mindestens eine linear verschiebbare Antriebsstange (146) umfasst, die an der linear verschiebbaren Greifbacke (138a, 138b) angreift.

4. Greifvorrichtung nach Anspruch 3, **dadurch gekennzeichnet, dass** der Linearantrieb (142) mindestens einen Antriebskolben (144a, 144b) umfasst, der in einem Antriebszylinder (150) unter Einwirkung eines hydraulischen oder pneumatischen Drucks verschiebbar ist.

5. Greifvorrichtung nach einem der Ansprüche 2 bis 4, **dadurch gekennzeichnet, dass** der Linearantrieb (142) mindestens eine Führungsstange (168) zum Führen der Linearbewegung der linear verschiebbaren Greifbacke (138a, 138b) umfasst.

6. Greifvorrichtung nach einem der Ansprüche 2 bis 5, **dadurch gekennzeichnet, dass** die Greifvorrichtung (126) mindestens zwei linear verschiebbare Greifbacken (138a, 138b) und ein Synchronisationsglied (182) zum Synchronisieren der Linearbewegung der linear verschiebbaren Greifbacken (138a, 138b) umfasst.

7. Greifvorrichtung nach einem der Ansprüche 1 bis 6, **dadurch gekennzeichnet, dass** die Greifvorrichtung (126) einen Schwenkantrieb für den mindestens einen schwenkbaren Greifanschluss (200) umfasst.

8. Greifvorrichtung nach Anspruch 7, **dadurch gekennzeichnet, dass** der Schwenkantrieb mindestens eine Bewegungswandlungsvorrichtung (204) umfasst, welche die Linearbewegung der mindestens einen linear verschiebbaren Greifbacke (138a, 138b) in eine Schwenkbewegung des mindestens einen schwenkbaren Greifanschlusses (200) um eine Schwenkachse (202) wandelt.

9. Greifvorrichtung nach Anspruch 8, **dadurch gekennzeichnet, dass** die Bewegungswandlungsvorrichtung (204) mit der linear verschiebbaren Greifbacke (138a, 138b) verbunden ist.

10. Greifvorrichtung nach Anspruch 9, **dadurch gekennzeichnet, dass** die Bewegungswandlungsvorrichtung (204) lösbar mit der linear verschiebbaren Greifbacke (138a, 138b) verbunden ist.

11. Greifvorrichtung nach einem der Ansprüche 8 bis 10, **dadurch gekennzeichnet, dass** die Bewegungswandlungsvorrichtung (204) wahlweise in mindestens einer ersten und einer zweiten Position relativ zu der linear verschiebbaren Greifbacke (138a, 138b) angeordnet werden kann, wobei die Richtung der Schwenkachse (202), um welche der schwenkbare Greifanschluss (200) mittels der Bewegungswandlungsvorrichtung (204) verschwenkt wird, in der zweiten Position der Bewegungswandlungsvorrichtung (204) gegenüber der Richtung der Schwenkachse (202) in der ersten Position der Bewegungswandlungsvorrichtung (204) verdreht ist.

12. Greifvorrichtung nach Anspruch 11, **dadurch gekennzeichnet, dass** die Richtung der Schwenkachse (202) in der zweiten Position der Bewegungswandlungsvorrichtung (204) gegenüber der Richtung der Schwenkachse (202) in der ersten Position der Bewegungswandlungsvorrichtung (204) um einen Winkel von ungefähr 90° verdreht ist.

13. Greifvorrichtung nach einem der Ansprüche 8 bis 12, **dadurch gekennzeichnet, dass** die Bewegungswandlungsvorrichtung (204) einen Pleuel (210) umfasst.

14. Greifvorrichtung nach einem der Ansprüche 8 bis 13, **dadurch gekennzeichnet, dass** die Bewegungswandlungsvorrichtung (204) einen Exzenter (208) umfasst.

15. Greifvorrichtung nach einem der Ansprüche 8 bis 14, **dadurch gekennzeichnet, dass** die Bewegungswandlungsvorrichtung (204) ein Schwenklager (206) für den schwenkbaren Greifanschluss (200) umfasst.

16. Greifvorrichtung nach einem der Ansprüche 1 bis 15, **dadurch gekennzeichnet, dass** die Greifvorrichtung (126) eine Abdeckung (234, 236) zum Verschließen der ersten Durchtrittsöffnung oder der zweiten Durchtrittsöffnung, wenn der schwenkbare Greifanschluss (200) an der zweiten Durchtrittsöffnung bzw. an der ersten Durchtrittsöffnung angeordnet ist, umfasst.

## Claims

1. A gripping device for a robot (100) or a gantry loader comprising at least one linearly displaceable gripping jaw (138a, 138b) and at least one pivotal gripping connection (200),
**characterized in that** the at least one pivotal gripping connection (200) can be arranged in at least one first and one second position relative to a housing (188) of the gripping device (126), and **in that** the housing (188) of the gripping device (126) comprises a first through opening for the passage of the pivotal gripping connection (200) in the first position and a second through opening for the passage of the pivotal gripping connection (200) in the second position.

2. A gripping device in accordance with Claim 1, **characterized in that** the gripping device (126) comprises a linear drive (142) for the at least one linearly displaceable gripping jaw (138a, 138b).

3. A gripping device in accordance with Claim 2, **characterized in that** the linear drive (142) comprises at least one linearly displaceable actuating rod (146) which engages the linearly displaceable gripping jaw (138a, 138b).

4. A gripping device in accordance with Claim 3, **characterized in that** the linear drive (142) comprises at least one drive piston (144a, 144b) which is displaceable in a drive cylinder (150) by the effect of a hydraulic or pneumatic pressure.

5. A gripping device in accordance with any of the Claims 2 to 4,
**characterized in that** the linear drive (142) comprises at least one guide rod (168) for controlling the linear movement of the linearly displaceable gripping jaw (138a, 138b).

6. A gripping device in accordance with any of the Claims 2 to 5,
**characterized in that** the gripping device (126) comprises at least two linearly displaceable gripping jaws (138a, 138b) and a synchronisation member (182) for synchronizing the linear movement of the linearly displaceable gripping jaws (138a, 138b).

7. A gripping device in accordance with any of the Claims 1 to 6,
**characterized in that** the gripping device (126) comprises a pivotal drive for the at least one pivotal gripping connection (200).

8. A gripping device in accordance with Claim 7, **characterized in that** the pivotal drive comprises at least one movement converting device (204) which converts the linear movement of the at least one linearly displaceable gripping jaw (138a, 138b) into a pivotal movement of the at least one pivotal gripping connection (200) about a pivotal axis (202).

9. A gripping device in accordance with Claim 8, **characterized in that** the movement converting device (204) is connected to the linearly displaceable gripping jaw (138a, 138b).

10. A gripping device in accordance with Claim 9, **characterized in that** the movement converting device (204) is connected to the linearly displaceable gripping jaw (138a, 138b) in releasable manner.

11. A gripping device in accordance with any of the Claims 8 to 10,
**characterized in that** the movement converting device (204) can be selectively arranged in at least one first and one second position relative to the linearly displaceable gripping jaw (138a, 138b), wherein, in the second position of the movement converting device (204), the direction of the pivotal axis (202), about which the pivotal gripping connection (200) is pivoted by means of the movement converting device (204), is rotated with respect to the direction of the pivotal axis (202) in the first position of the movement converting device (204).

12. A gripping device in accordance with Claim 11, **characterized in that** the direction of the pivotal axis (202) in the second position of the movement converting device (204) is rotated through an angle of approximately 90° with respect to the direction of the pivotal axis (202) in the first position of the movement converting device (204).

13. A gripping device in accordance with any of the Claims 8 to 12,
**characterized in that** the movement converting device (204) comprises a connecting rod (210).

14. A gripping device in accordance with any of the Claims 8 to 13,
**characterized in that** the movement converting device (204) comprises an eccentric cam (208).

15. A gripping device in accordance with any of the Claims 8 to 14,
**characterized in that** the movement converting device (204) comprises an articulated bearing (206) for the pivotal gripping connection (200).

16. A gripping device in accordance with any of the Claims 1 to 15,
**characterized in that** the gripping device (126) comprises a cover (234, 236) for closing the first through opening or the second through opening when the pivotal gripping connection (200) is arranged at the second through opening or at the first through opening respectively.

## Revendications

1. Dispositif de saisie pour un robot (100) ou un portique de chargement, comportant au moins une mâchoire de prise (138a, 138b) mobile linéairement et au moins un raccordement de saisie (200) pivotant,
**caractérisé en ce que**
l'au moins un raccordement de saisie (200) pivotant peut être disposé dans au moins une première et une seconde position par rapport à un boîtier (188) du dispositif de saisie (126) et **en ce que** le boîtier (188) du dispositif de saisie (126) présente une première ouverture de passage pour le passage du raccordement de saisie (200) pivotant dans la première position et une seconde ouverture de passage pour le passage du raccordement de saisie (200) pivotant dans la seconde position.

2. Dispositif de saisie selon la revendication 1,
**caractérisé en ce que** le dispositif de saisie (126) comporte un entraînement linéaire (142) pour l'au moins une mâchoire de prise (138a, 138b) mobile linéairement.

3. Dispositif de saisie selon la revendication 2,
**caractérisé en ce que** l'entraînement linéaire (142) comporte au moins une tige d'entraînement (146) mobile linéairement qui engage la mâchoire de prise (138a, 138b) mobile linéairement.

4. Dispositif de saisie selon la revendication 3,
**caractérisé en ce que** l'entraînement linéaire (142) comporte au moins un piston d'entraînement (144a, 144b) qui est mobile dans un cylindre d'entraînement (150) sous l'effet d'une pression hydraulique ou pneumatique.

5. Dispositif de saisie selon l'une quelconque des revendications 2 à 4, **caractérisé en ce que** l'entraînement linéaire (142) comporte au moins une tige de guidage (168) pour le guidage du mouvement linéaire de la mâchoire de prise (138a, 138b) mobile linéairement.

6. Dispositif de saisie selon l'une quelconque des revendications 2 à 5, **caractérisé en ce que** le dispositif de saisie (126) comporte au moins deux mâchoires de prise (138a, 138b) mobiles linéairement et un élément de synchronisation (182) pour la synchronisation du mouvement linéaire des mâchoires de prise (138a, 138b) mobiles linéairement.

7. Dispositif de saisie selon l'une quelconque des revendications 1 à 6, **caractérisé en ce que** le dispositif de saisie (126) comporte un entraînement pivotant pour l'au moins un raccordement de saisie (200) pivotant.

8. Dispositif de saisie selon la revendication 7,
**caractérisé en ce que** l'entraînement pivotant comporte au moins un dispositif de conversion de mouvement (204) qui convertit le mouvement linéaire de l'au moins une mâchoire de prise (138a, 138b) mobile linéairement en un mouvement de pivotement de l'au moins un raccordement de saisie (200) pivotant autour d'un axe de pivotement (202).

9. Dispositif de saisie selon la revendication 8,
**caractérisé en ce que** le dispositif de conversion de mouvement (204) est relié à la mâchoire de prise (138a, 138b) mobile linéairement.

10. Dispositif de saisie selon la revendication 9,
**caractérisé en ce que** le dispositif de conversion de mouvement (204) est relié de manière amovible à la mâchoire de prise (138a, 138b) mobile linéairement.

11. Dispositif de saisie selon l'une quelconque des revendications 8 à 10, **caractérisé en ce que** le dispositif de conversion de mouvement (204) peut être disposé au choix dans au moins une première et une seconde position par rapport à la mâchoire de prise (138a, 138b) mobile linéairement, la direction de l'axe de pivotement (202), autour duquel le raccordement de saisie (200) pivotant est pivoté au moyen du dispositif de conversion de mouvement (204), étant pivotée dans la seconde position du dispositif de conversion de mouvement (204) par rapport à la direction de l'axe de pivotement (202) dans la première position du dispositif de conversion de mouvement (204).

12. Dispositif de saisie selon la revendication 11,
**caractérisé en ce que** la direction de l'axe de pivotement (202) est pivotée autour d'un angle d'environ 90 ° dans la seconde position du dispositif de conversion de mouvement (204) par rapport à la direction de l'axe de pivotement (202) dans la première position du dispositif de conversion de mouvement (204).

13. Dispositif de saisie selon l'une quelconque des revendications 8 à 12, **caractérisé en ce que** le dispositif de conversion de mouvement (204) comprend une bielle (210).

14. Dispositif de saisie selon l'une quelconque des revendications 8 à 13, **caractérisé en ce que** le dispositif de conversion de mouvement (204) comporte un excentrique (208).

15. Dispositif de saisie selon l'une quelconque des revendications 8 à 14, **caractérisé en ce que** le dispositif de conversion de mouvement (204) comporte un palier de pivotement (206) pour le raccordement de saisie (200) pivotant.

16. Dispositif de saisie selon l'une quelconque des revendications 1 à 15, **caractérisé en ce que** le dispositif de saisie (126) comporte un recouvrement (234, 236) pour la fermeture de la première ouverture de passage ou de la seconde ouverture de passage si le raccordement de saisie (200) pivotant est disposé sur la seconde ouverture de passage ou sur la première ouverture de passage.
